# EUROPEAN PATENT SPECIFICATION

(11) **EP 2 687 393 B1**
(45) Date of publication and mention of the grant of the patent: **23.01.2019**
(21) Application number: 12771197.6
(22) Date of filing: 12.04.2012
(51) Int. Cl.: B60J 1/00, B29C 45/14, B60J 10/70, B32B 3/08

(54) **FRAMED WINDOW PANE AND METHOD FOR MANUFACTURING FRAMED WINDOW PANE**
GERAHMTE FENSTERSCHEIBE UND VERFAHREN ZUR HERSTELLUNG DER GERAHMTEN FENSTERSCHEIBE
PANNEAU DE VITRE À ENCADREMENT ET PROCÉDÉ DE FABRICATION D'UN PANNEAU DE VITRE À ENCADREMENT

(30) Priority: 12.04.2011 JP 2011088341
(43) Date of publication of application: 22.01.2014
(73) Proprietor: AGC Inc., Tokyo 100-8405 (JP)
(72) Inventor: KONDO Takanobu, Tokyo 100-8405 (JP)
(74) Representative: Müller-Boré & Partner Patentanwälte PartG mbB
(86) International application number: PCT/JP2012/060063
(87) International publication number: WO 2012/141262

(56) References cited:
- EP-A2- 0 956 986
- WO-A1-2009/011453
- JP-A- 9 235 145
- JP-A- H1 159 172
- JP-A- 62 113 614
- JP-A- 2001 310 626
- JP-A- 2001 310 626
- JP-A- 2002 292 681
- JP-A- 2007 118 669
- JP-A- 2007 186 018

## Description

### TECHNICAL FIELD

The present invention relates to a sheet material for a window with a frame member for use as a window glass for a vehicle and a method for producing the sheet material for a window with a frame member.

### BACKGROUND ART

In the case where a glass sheet for a window (a sheet material for a window) is attached to an opening portion for a window of a vehicle, a long or frame-shaped resin molding (hereinafter, referred to as a frame member) is attached to a gap between a circumferential edge portion of the glass sheet and the opening portion for a window. Sealing the gap by the frame member enables to prevent rainwater or the like from entering an inside of a vehicle. As the configuration of such a sheet material for a window with a frame member, there are known a configuration called a "three-surface molding" described in Patent Document 1 and a configuration called a "two-surface molding" described in Patent Document 2.

The three-surface molding has a shape that a cross-section surface of a frame member is an approximately U-shaped so that the frame member contacts the glass sheet at three surfaces in total of an outer side surface, an inner side surface and a peripheral surface of the glass sheet.

By contrast, the two-surface molding has a shape that a cross-section surface of a frame member is an approximately L-shaped so that the frame member contacts the glass sheet at two surfaces in total of an inner side surface and a peripheral surface of the glass sheet, and that the frame member does not project from an outer side surface of the glass sheet.

Compared with the three-surface molding, in the two-surface molding, the frame member does not project outside of a vehicle, and a flush-surfaced vehicle body can be achieved. Consequently, the two-surface molding can provide not only a superior external appearance but also an advantage that air is allowed to flow smoothly from a windshield to a rear window while running a vehicle, and that the generation of uncomfortable wind noise is reduced.

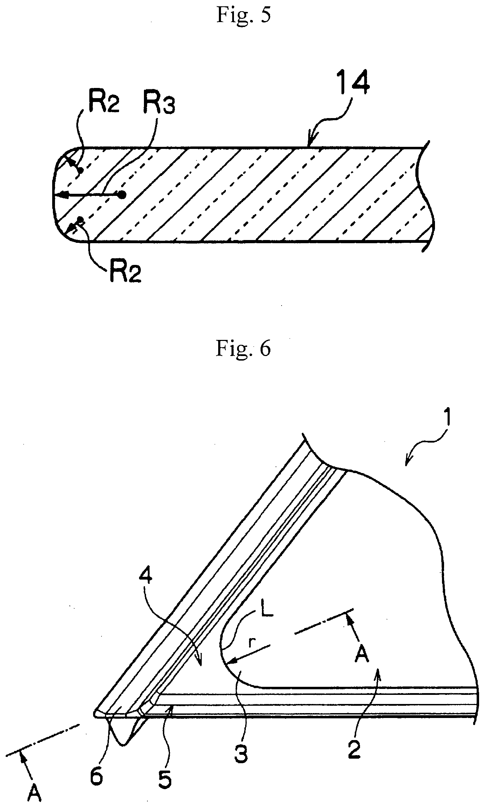

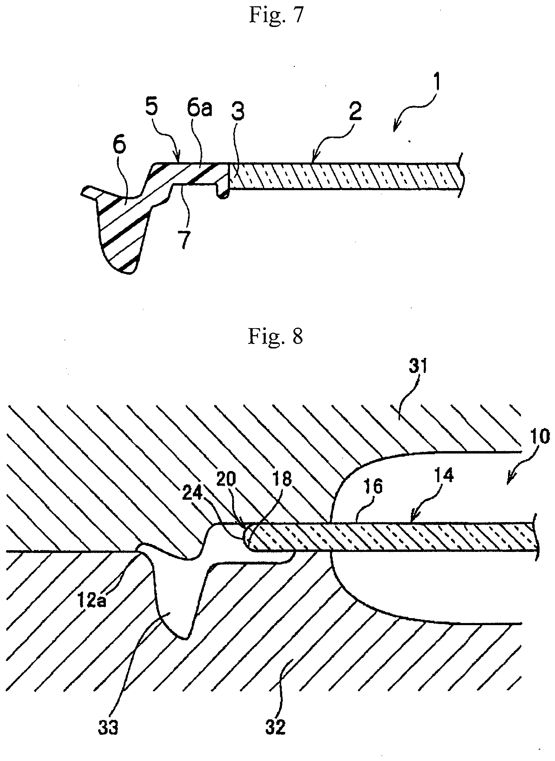

Incidentally, in a conventional sheet material for a window with a frame member 1 having the two-surface molding shown in Figs. 6 and 7, in general, a corner portion 3 of a glass sheet 2 is proceeded so that a curvature radius r of the corner portion 3 falls within a range of 3 mm < r < 8 mm. Therefore, at a corner portion 4 of the sheet material for a window with a frame member 1, a parting line (a boundary line) L between the glass sheet 2 and the frame member 5 is formed into a large arc-like shape, leading to a problem that the external design gets deteriorated. Namely, in order to enhance the external design, the parting line L needs to be formed into a pin-angle shape (which will be described later).

In addition, due to the fact that the curvature radius of the corner portion 3 of the glass sheet 2 is large as described above, the corner portion 3 cannot be extended to the vicinity of a distal end portion 6a of a corner portion 6 (which is the same as the corner portion 4 of the sheet material for a window with a frame member 1) of the frame member 5 as shown in Fig. 7. Therefore, the rigidity of the corner portion 4 of the sheet material for a window with a frame member 1 cannot be enhanced. In addition, when a gap between the corner portion 3 of the glass sheet 2 and the corner portion 6 of the frame member 5 is filled with the frame member 5 made of resin, the volume of the resin used to fill the gap becomes large, and this may lead to a problem that undesirable depressions (hereinafter, referred to as sink marks) are produced in a surface of the frame member 5 due to the shrinkage while curing. Consequently, a lightening portion 7 needs to be formed in an inner side surface of the frame member 5 so as to prevent the production of visible sink marks in the surface of the corner portion 6 of the frame member 5. This also causes reduction in the rigidity of the corner portion 4 of the sheet material for a window with a frame member 1.

It is general practice that a portion of the opening portion for a window where the corner portion 4 of the sheet material for a window with the frame member 1 is received is formed into a sharp shape in order to enhance the external design of a vehicle body. Therefore, in the conventional sheet material for a window with a frame member 1, a long distance has to be taken between the corner portion 3 of the glass sheet 2 and the distal end portion 6a of the corner portion 6 of the frame member 5, this causes the problem described above.

Incidentally, the applicant of the present application provides a sheet material for a window with a resin frame member in which the resin frame member is injection-molded integrally around a circumference of a glass sheet (marketed under the registered trademark of "MAW", MODULUS ASSY WINDOW) as a window glass for a vehicle (Patent Document 3).

### BACKGROUND ART DOCUMENT

### PATENT DOCUMENT

Patent Document 1: JP-A-2002-129839
Patent Document 2: JP-A-11-129747
Patent Document 3: JP-A-2002-292681

JP 2001 310626 A discloses a window material for a vehicle. In the material for the vehicle, the cross-section shape of an end surface is made asymmetrical with respect to a central surface located between the outside surface of the vehicle and the inside surface thereof. The outside dimension of the outside surface is made larger than that of the inside surface, and the end surface is made an inclined plane relative to the outside surface.

JP H11 59172 A discloses the preamble of claim 1.

### SUMMARY OF THE INVENTION

### PROBLEMS THAT THE INVENTION IS TO SOLVE

The invention has been made in view of these situations, and an object thereof is to provide a sheet material for a window with a frame member which can provide an improved external design and higher rigidity.

### MEANS FOR SOLVING THE PROBLEMS

In order to achieve the above-mentioned object, the invention provides a sheet material for a window with a frame member in which a resin frame member is molded integrally on at least one of an indoor side surface and a peripheral surface of the sheet material for a window at a circumferential edge portion thereof, wherein the sheet material for a window comprises a chamfered surface on the circumferential edge portion, and, in a plan view of the sheet material for a window, a chamfered width w of the chamfered surface and a curvature radius r of a corner portion of a non-chamfered area satisfy w ≥ r and r < 3 mm.

In order to achieve the above-mentioned object, the invention also provides a method for producing a sheet material for a window with a frame member, the method comprising: closing and clamping a mold having a lower mold and an upper mold which are disposed to face each other so as to form a cavity therebetween; and molding a resin frame member integrally along a circumferential edge portion of a sheet material for a window, wherein, in a plan view of the sheet material for a window, the sheet material for a window is chamfered so that a chamfered width w of a chamfered surface and a curvature radius r of a corner portion of a non-chamfered area satisfy w ≥ r, and r < 3 mm, and the sheet material for a window is clamped by the mold so as to mold the resin frame member integrally along the circumferential edge portion of the sheet material for a window.

In the sheet material for a window with a frame member according to one embodiment of the invention, it is preferred that the chamfered width w and a thickness t of the sheet material for a window satisfy w ≤ t/2, and the thickness t satisfies 2mm ≤ t ≤ 6mm.

In the sheet material for a window with a frame member according to one embodiment of the invention, in the plan view of the sheet material for a window, a distance M1 between the corner portion of the non-chamfered area and a corner portion of the frame member is preferably 0.8mm ≤ M1 ≤ 6mm, and more preferably 3mm ≤ M1 ≤ 6mm.

In the sheet material for a window with a frame member according to one embodiment of the invention, an angle α of the corner portion of the non-chamfered area is preferably 20° ≤ α ≤ 90°, and more preferably 25° ≤ α ≤ 60°.

In the sheet material for a window with a frame member according to one embodiment of the invention, the sheet material for a window is preferably used for a window glass for a vehicle.

In the sheet material for a window with a frame member according to one embodiment of the invention, it is more preferred that the sheet material for a window is a strengthened glass and is used for a fixed window of a vehicle.

### ADVANTAGE OF THE INVENTION

According to the sheet material for a window with a frame member according to one embodiment of the invention, the improved external design and higher rigidity can be obtained.

### BRIEF DESCRIPTION OF THE DRAWINGS

[Fig. 1] Fig. 1 is an enlarged view of a main part of a sheet material for a window with a frame member representing an embodiment.
[Fig. 2] Fig.2 is a sectional view of the sheet material for a window with a frame member shown in Fig. 1 along the line A-A in the figure.
[Fig. 3] Fig. 3 is an explanatory view used to explain a pin-angle shape of a glass sheet.
[Fig. 4] Fig. 4 is a sectional view of the sheet material for a window with a frame member shown in Fig. 1 along the line B-B in the figure.
[Fig. 5] Fig. 5 is a sectional view showing a peripheral surface shape of the glass sheet which has a chamfered surface with a plurality of curvature radii.
[Fig. 6] Fig. 6 is an enlarged plan view of a main part of a conventional sheet material for a window with a frame member.
[Fig. 7] Fig. 7 is a sectional view of the sheet material for a window with a frame member shown in Fig. 6 along the line A-A in the figure.
[Fig. 8] Fig. 8 is a view showing one embodiment of a method for producing the sheet material for a window with a frame member according to the invention.

### MODE FOR CARRYING OUT THE INVENTION

Hereinafter, a preferred embodiment of a sheet material for a window with a frame member according to the invention will be described in detail based on the accompanying drawings.

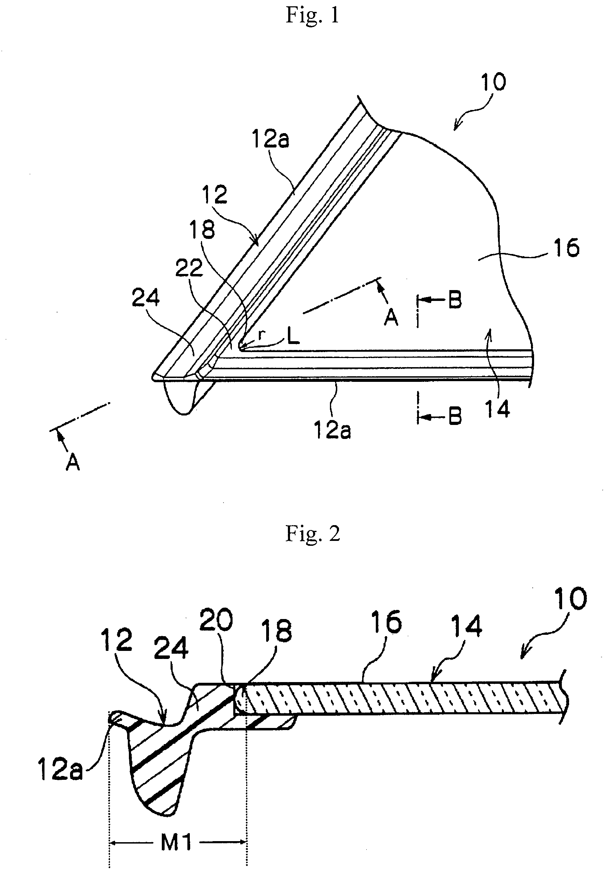

Fig. 1 is an enlarged view of a main part of a sheet material for a window with a frame member (hereinafter, referred to as a glass sheet with a frame member) 10 representing an embodiment of the invention, and Fig. 2 is a sectional view along the line A-A in Fig. 1.

A glass sheet with a frame member 10 shown in these drawings is a front bench glass having a triangular surface which is attached to an opening portion for a window of a vehicle. However, the sheet material for a window with a frame member of this embodiment is not limited to the application for the front bench glass and hence can also be applied preferably to a fixed window such as side glass, rear quarter glass, windshield, rear window or roof glass.

In addition, in this embodiment, while a resin frame member will be described as a frame member 12 of the glass sheet with a frame member 10, this resin frame member is a member used to close a gap between the opening portion for a window in a vehicle and a glass sheet 14 for a window. Consequently, in addition to a resin molding, the frame member may be formed to contain various insert members such as, a resin garnish, a metallic member which are attached integrally to the molding by injection-molding or the like and a lip molding which is subject to contact with an opening portion in the vehicle. Additionally, the frame member includes in its concept a resin frame member to which a member designed to enhance the design and functional properties is assembled further after the resin molding is molded (a so-called retrofit assembling).

Further, in the glass sheet 14 attached to the opening portion for a window, an outer side of a vehicle is referred to as a front surface, and an inner side of a vehicle as a rear surface. Thus, Fig. 1 is a perspective view of the glass sheet with a frame member 10 with the front surface of the glass sheet 14 made visible.

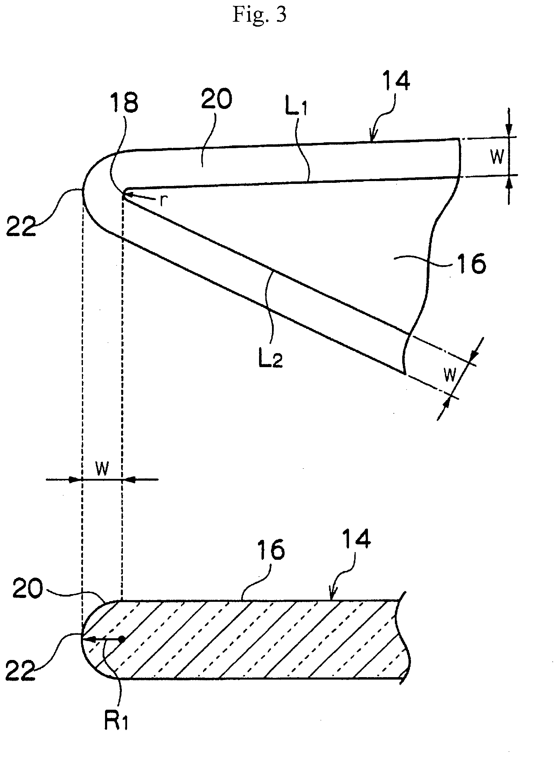

Furthermore, the pin-angle shape described in the description of the background art means a sharp shape in which an outer edge portion of a non-chamfered area 16 on the front surface of the glass sheet 14 shown in Fig. 3 is formed in a corner portion 18 of the non-chamfered area by intersection of not curves but two straight lines L₁ and L₂ which are boundary lines between a chamfered surface 20 and the non-chamfered area 16.

This enables the external design to improve since in a corner portion 22 of the glass sheet of the glass sheet with a "two-surface molding" frame member 10 shown in Figs. 1 and 2, a parting line L between the frame member 12 and the glass sheet 14 is seen as the pin-angle shape. That is, the sheet material for a window with a frame member according to this embodiment is intended for a glass sheet with a frame member 10 of not "three-surface molding" but "two-surface molding" or of a "single-surface molding" in which the frame member 12 is attached to at least one of the rear surface or a peripheral surface of the glass sheet 14. Namely, in the glass sheet with the "three-surface molding" frame member, the frame member is attached to the front surface and the rear surface of the glass sheet, and therefore, the parting line L shown in Fig. 1 cannot be exposed. The sheet material for a window with a frame member of the "two-surface molding" and the sheet material for a window with a frame member of the "single-surface molding" are sheet materials for a window which satisfy the market's demand of exposing the glass sheet to as large an extent as possible while the frame member is exposed to as small an extent as possible.

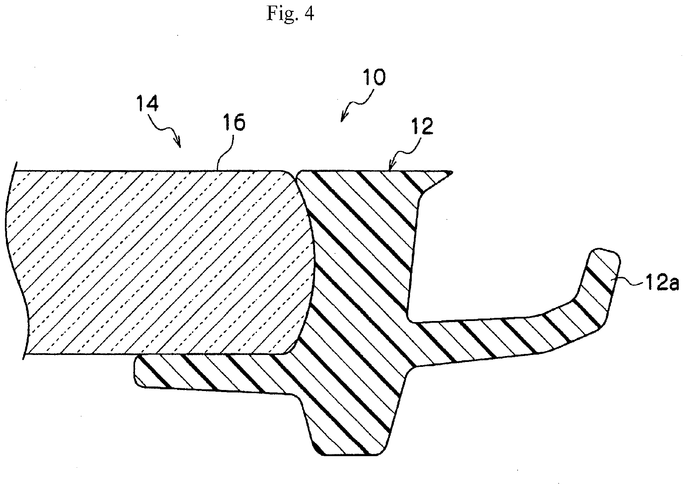

The glass sheet with a frame member 10 of this embodiment includes the glass sheet 14 and the frame member 12, and is fixed to the opening portion for a window in the vehicle via an adhesive. In addition, a gap between the end portion of the glass sheet 14 and the opening portion for a window is sealed by a lip portion 12a provided along an outer circumferential edge portion of the frame member 12 shown in Figs. 1, 2 and 4. Incidentally, Fig. 4 is a sectional view of the sheet material for a window with a frame member 10 shown in Fig. 1 along the line B-B in the figure.

An elastic resin material such as TPO (olefin-based thermoplastic elastomer), TPE (ethylene-based thermoplastic elastomer) or PVC (polyvinyl chloride) can be raised as the material of the frame member 12. In addition, a urethane adhesive can be preferably used as the adhesive with which the frame member 12 is fixed to the opening portion for a window.

Although a single glass sheet may be used as the glass sheet 14, a laminated glass sheet with an intermediate film of PVB or the like interposed between constituent glass sheets may be used. In addition, the sheet material for a window is not limited to the glass sheet 14, and hence, a panel of organic resin such as transparent resin or semitransparent resin or a composite material of a glass sheet and the organic resin may be used.

Next, the characteristics of the glass sheet with a frame member 10 of the embodiment will be described.

As shown in Fig. 3, this glass sheet with a frame member 10 includes the corner portion 22 of the glass sheet 14 and the chamfered surface 20 formed along the circumferential edge portion of the glass sheet 14. In a plan view of the glass sheet 14, a chamfered width w of the chamfered surface 20 and a curvature radius r of the corner portion 18 of the non-chamfered area 16 satisfy w ≥ r, and r < 3 mm.

By producing the glass sheet 14 which satisfies w ≥ r, and r < 3 mm, as shown in Fig. 1, the parting line L between the glass sheet 14 and the frame member 12 in the corner portion 22 of the glass material with a frame member 10 can be formed into the pin-angle shape. In Fig. 3, assuming that an angle at which the straight lines L₁ and L₂ intersect each other to form the sharp shape is an angle α, the pin-angle shape is formed so that the angle α preferably satisfies 20° ≤ α ≤ 90° and more preferably satisfies 25° ≤ α ≤ 60° in view of consistency with a design of a vehicle.

By adopting this configuration, according to the glass sheet with a frame member 10, the external design is improved, compared to the conventional glass sheet with a frame member 1 shown in Fig. 6. In addition, as shown in Fig. 2, the corner portion 18 of the non-chamfered area 16 can be existed to the vicinity of the lip portion (a distal end portion) 12a of the frame member 12. Thus, the rigidity of the frame member 12 at the corner portion 22 of the glass sheet with a frame member 10 is enhanced, this enhances the overall rigidity of the glass sheet with a frame portion 10. Further, since a lightening portion does not have to be provided on an inner side of a vehicle of a corner portion 24 in the frame member 12, the rigidity is enhanced further, the volume of the resin used to fill the gap is reduced, and the glass material with a frame member 10 which provides a good external design by suppressing the formation of sink marks due to the shrinkage while curing, can be obtained. This advantage becomes remarkable with the sheet material for a window with frame member of the two-surface molding.

In addition, if a distance M1 between the corner portion 18 of the non-chamfered area and the corner portion 12a of the frame member shown in Fig. 2 is made short, the rigidity of the corner portion of the glass sheet with a frame member 10 is improved. With M1 being shorter than 6 mm, the rigidity of the corner portion is enhanced higher than that of the conventional glass sheet with a frame member, with M1 being 0.8 mm or larger, the frame member 12 can be molded integrally to the glass sheet with a frame member 10, and with M1 being 3 mm or larger, the degree of freedom in relation to sectional shape is improved, which is preferable to impart a shape including such a functionality as a lip.

Additionally, in order to obtain the glass sheet 14 shown in Fig. 3, that is, in order to obtain the glass sheet 14 in which the corner portion 18 of the non-chamfered area is formed into the pin-angle shape, in a chamfering step of an edge portion of the glass sheet 14, the edge portion is chamfered by using a grinding stone with which a minute chamfering can be implemented. In this case, a chamfering R is smaller than R3, preferably R1.5, and more preferably R1 or less.

Namely, the chamfering R and the chamfered width w take substantially equal values. In addition, the chamfering R may be obtained with a single curvature radius of R₁ as shown in Fig. 3 or obtained with a combination of curvature radii of R₂ and R₃ as shown in Fig. 5. Further, a thread chamfering may be adopted as chamfering. Also, in plan view, a thread chamfered width C and the chamfered width w take substantially equal values as well.

On the other hand, it is preferred that the chamfered width w and the thickness t of the glass sheet 14 satisfy w ≤ t/2 and that the thickness t is 2 mm ≤ t ≤ 6 mm. In the case where the thickness t falls within the range, the glass sheet with a frame member 10 can preferably be used as a strengthened glass for a vehicle.

As described above, the chamfering R and the chamfered width w take substantially equal values. In addition, when chamfered with the single curvature radius R₁, a maximum value of the chamfering R is t/2, and therefore, the chamfered width w becomes w ≤ t/2. The thickness t of the glass sheet 14 is preferably in the range of 2.3 to 5 mm and is more preferably in the range of 2.5 to 3.5 mm, and w, r and R may be set according to the thickness t.

If the thickness t of the sheet material for a window is large, strengthening of a glass is facilitated, and the resistance to breakage by jumping stone is improved. In the case where the thickness is 3.5 mm or smaller or preferably 2.5 mm or smaller, the resulting thickness contributes to a reduction in weight of the sheet material for a window with a frame member. In the case where the thickness t is 2.5 mm or larger, the resulting thickness makes it easy to ensure a performance required on vehicle safety glass, however, in the case where the thickness is 2 mm or smaller, it becomes difficult to strengthen a glass by using a known method, and the application range of a window glass for a vehicle is -limited.

One embodiment of a method for producing the sheet material for a window with a frame member of the invention will be described based on Fig. 8. As shown in Fig. 8, by using a mold having a cavity 33 formed between an upper mold 31 and a lower mold 32, the glass sheet 14 was placed in a predetermined position on the lower mold 32 with the mold opened, and then, the upper mold 31 was closed to clamp the mold. Thereafter, a resin including soft PVC was poured into an interior of the cavity in the mold from a sprue (not shown) so that a resin frame member 12 was injection-molded integrally on the glass sheet 14. After being cooled, the mold was opened, and then, the sheet material for a window with the resin frame member 12 was obtained.

While the invention has been described in detail with reference to specific embodiments thereof, it will be apparent to one skilled in the art that various changes and modifications can be made therein without departing from the scope thereof, as defined by the claims. Incidentally, the present application is based on Japanese Patent Application No. 2011-088341 filed on April 12, 2011

### DESCRIPTION OF REFERENCE NUMERALS AND SIGNS

- 10: Glass sheet with a frame member;
- 12: Frame member;
- 14: Glass sheet;
- 16: Non-chamfered area;
- 18: Corner portion of non-chamfered area;
- 20: Chamfered surface;
- 22: Corner portion of glass sheet;
- 24: Corner portion of frame member;
- 31: Upper mold;
- 32: Lower mold;
- 33: Cavity.

## Claims

1. A sheet material for a window with a frame member (10) in which a resin frame member (12) is molded integrally on at least one of an indoor side surface and a peripheral surface of the sheet material (14) for a window at a circumferential edge portion thereof,
wherein the sheet material (14) for a window comprises a chamfered surface (20) on the circumferential edge portion,
**characterized in that**
in a plan view of the sheet material (14) for a window, a chamfered width w of the chamfered surface (20) and a curvature radius r of a corner portion (18) of a non-chamfered area (16) satisfy w ≥ r and r < 3 mm.

2. The sheet material for a window with a frame member (10) according to claim 1, wherein the chamfered width w and a thickness t of the sheet material (14) for a window satisfy w ≤ t/2, and the thickness t satisfies 2 mm ≤ t ≤ 6 mm.

3. The sheet material for a window with a frame member (10) according to claim 1 or 2, wherein, in the plan view of the sheet material (14) for a window, a distance M1 between the corner portion (18) of the non-chamfered area (16) and a corner portion (12a) of the frame member (12) is 0.8 mm ≤ M1 ≤ 6 mm.

4. The sheet material for a window with a frame member (10) according to any one of claims 1 to 3, wherein, in the plan view of the sheet material (14) for a window, an angle α of the corner portion (18) of the non-chamfered area (16) is 20° ≤ α ≤ 90°.

5. The sheet material for a window with a frame member (10) according to any one of claims 1 to 4, wherein the sheet material (14) for a window is a window glass for a vehicle.

6. The sheet material for a window with a frame member (10) according to any one of claims 1 to 5, wherein the sheet material (14) for a window is a strengthened glass and is used for a fixed window of a vehicle.

7. A method for producing a sheet material for a window with a frame member, the method comprising:
closing and clamping a mold having a lower mold and an upper mold which are disposed to face each other so as to form a cavity therebetween; and
molding a resin frame member integrally along a circumferential edge portion of a sheet material for a window,
wherein, in a plan view of the sheet material for a window, the sheet material for a window is chamfered so that a chamfered width w of a chamfered surface and a curvature radius r of a corner portion of a non-chamfered area satisfy w ≥ r, and r < 3 mm, and the sheet material for a window is clamped by the mold so as to mold the resin frame member integrally along the circumferential edge portion of the sheet material for a window.

8. The method for producing a sheet material for a window with a frame member according to claim 7, wherein the sheet material for a window is set so that a distance M1 between the corner portion of the non-chamfered area and a corner portion of the frame member in the cavity is 0.8 mm ≤ M1 ≤ 6 mm.

9. The sheet material for a window with a frame member (10) according to claim 1, wherein a lightening portion are not provided on an inner side of a vehicle of the corner portion (24) in the frame member (12).

## Patentansprüche

1. Ein Blattmaterial (*sheet material*) für ein Fenster mit einem Rahmenelement (10), in dem ein Harzrahmenelement (12) integral auf mindestens einer von einer Innenseitenfläche und einer Umfangsfläche des Blattmaterials (14) für ein Fenster an einem Umfangsrandabschnitt davon geformt ist,
wobei das Blattmaterial (14) für ein Fenster eine abgeschrägte Oberfläche (20) auf dem Umfangsrandabschnitt umfasst, **dadurch gekennzeichnet, dass**
in einer Draufsicht auf das Blattmaterial (14) für ein Fenster eine abgeschrägte Breite w der abgeschrägten Oberfläche (20) und ein Krümmungsradius r eines Eckabschnitts (18) eines nicht abgeschrägten Bereichs (16) w ≥ r und r < 3 mm erfüllt.

2. Das Blattmaterial für ein Fenster mit einem Rahmenelement (10) nach Anspruch 1, wobei die abgeschrägte Breite w und eine Dicke t des Blattmaterials (14) für ein Fenster Folgendes erfüllen: w ≤ t/2 und wobei die Dicke Folgendes erfüllt: 2 mm ≤ t ≤ 6 mm.

3. Das Blattmaterial für ein Fenster mit einem Rahmenelement (10) nach Anspruch 1 oder 2, wobei in der Draufsicht auf das Blattmaterials (14) für ein Fenster ein Abstand M1 zwischen dem Eckabschnitt (18) des nicht abgeschrägten Bereichs (16) und einem Eckabschnitt (12a) des Rahmenelements (12) 0,8 mm ≤ M1 ≤ 6 mm beträgt.

4. Das Blattmaterial für ein Fenster mit einem Rahmenelement (10) nach irgendeinem der Ansprüche von 1 bis 3, wobei in der Draufsicht auf das Blattmaterial (14) für ein Fenster ein Winkel α des Eckabschnitts (18) des nicht abgeschrägten Bereichs (16) 20° ≤ α ≤ 90° beträgt.

5. Das Blattmaterial für ein Fenster mit einem Rahmenelement (10) nach irgendeinem der Ansprüche von 1 bis 4, wobei das Blattmaterial (14) für ein Fenster eine Fensterscheibe für ein Fahrzeug ist.

6. Das Blattmaterial für ein Fenster mit einem Rahmenelement (10) nach einem der Ansprüche von 1 bis 5, wobei das Blattmaterial (14) für ein Fenster ein verstärktes Glas ist und für eine feste Fensterscheibe eines Fahrzeugs verwendet wird.

7. Ein Verfahren zur Herstellung eines Blattmaterials für ein Fenster mit einem Rahmenelement, wobei das Verfahren Folgendes umfasst:
Schließen und Festklemmen einer Gussform mit einer unteren Form und einer oberen Form, die so angeordnet sind, dass sie einander gegenüberliegen, um einen Hohlraum dazwischen zu bilden; und
einstückig Formen eines Harz-Rahmenelements entlang eines Umfangsrandabschnitt aus einem Blattmaterial für ein Fenster,
wobei in einer Draufsicht auf das Blattmaterial für ein Fenster das Blattmaterial für ein Fenster abgeschrägt wird, sodass eine abgeschrägte Breite w einer abgeschrägten Oberfläche und ein Krümmungsradius r eines Eckabschnitts eines nicht abgeschrägten Bereichs w ≥ r und r < 3 mm erfüllt, und wobei das Blattmaterial für ein Fenster durch die Gussform so eingespannt wird, dass das HarzRahmenelement integral entlang des Umfangskantenabschnitts des Blattmaterials für ein Fenster geformt wird.

8. Das Verfahren zur Herstellung eines Blattmaterials für ein Fenster mit einem Rahmenelement nach Anspruch 7, wobei das Blattmaterial für ein Fenster so eingestellt wird, dass ein Abstand M1 zwischen dem äußeren Abschnitt des nicht abgeschrägten Bereichs und einem Eckabschnitt des Rahmenelements im Hohlraum 0,8 mm ≤ M1 ≤ 6 mm beträgt.

9. Das Blattmaterial für ein Fenster mit einem Rahmenelement (10) nach Anspruch 1, wobei ein Beleuchtungsabschnitt nicht auf einer Fahrzeug-Innenseite des Eckabschnitts (24) im Rahmenelement (12) vorgesehen ist.

## Revendications

1. Un matériau en feuille pour une fenêtre avec un élément d'encadrement (10) dans lequel un élément d'encadrement en résine (12) est moulé d'un seul tenant sur au moins une parmi une surface latérale intérieure et une surface périphérique du matériau en feuille (14) pour une fenêtre auprès d'une partie de bord circonférentiel de celle-ci,
sachant que le matériau en feuille (14) pour une fenêtre comprend une surface chanfreinée (20) sur la partie de bord circonférentiel, **caractérisé en ce que,**
dans une vue en plan du matériau en feuille (14) pour une fenêtre, une largeur chanfreinée w de la surface chanfreinée (20) et un rayon de courbure r d'une partie de coin (18) d'une zone non chanfreinée (16) satisfait w ≥ r et r < 3 mm.

2. Le matériau en feuille pour une fenêtre avec un élément d'encadrement (10) d'après la revendication 1, sachant que la largeur chanfreinée w et une épaisseur t du matériau en feuille (14) pour une fenêtre satisfont w ≤ t/2, et que l'épaisseur t satisfait 2 mm ≤ t ≤ 6 mm.

3. Le matériau en feuille pour une fenêtre avec un élément d'encadrement (10) d'après la revendication 1 ou 2, sachant que, dans la vue en plan du matériau en feuille (14) pour une fenêtre, une distance M1 entre la partie de coin (18) de la zone non chanfreinée (16) et une partie de coin (12a) de l'élément d'encadrement (12) est 0,8 mm ≤ M1 ≤ 6 mm.

4. Le matériau en feuille pour une fenêtre avec un élément d'encadrement (10) d'après l'une quelconque des revendications de 1 à 3, sachant que, dans la vue en plan du matériau en feuille (14) pour une fenêtre, un angle α de la partie de coin (18) de la zone non chanfreinée (16) est de 20° ≤ α ≤ 90°.

5. Le matériau en feuille pour une fenêtre avec un élément d'encadrement (10) d'après l'une quelconque des revendications de 1 à 4, sachant que le matériau en feuille (14) pour une fenêtre est une vitre pour un véhicule.

6. Le matériau en feuille pour une fenêtre avec un élément d'encadrement (10) d'après l'une quelconque des revendications de 1 à 5, sachant que le matériau en feuille (14) pour une fenêtre est un verre renforcé et est utilisé pour une vitre fixe d'un véhicule.

7. Un procédé de production d'un matériau en feuille pour une fenêtre avec un élément d'encadrement, le procédé comprenant le fait de :
fermer et serrer un moule ayant un moule inférieur et un moule supérieur qui sont disposés l'un en face de l'autre de manière à former une cavité entre eux ; et de
mouler un élément d'encadrement en résine intégralement le long d'une partie de bord circonférentiel d'un matériau en feuille pour une fenêtre,
sachant que, dans une vue en plan du matériau en feuille pour une fenêtre, le matériau en feuille pour une fenêtre est chanfreiné de manière qu'une largeur chanfreinée w d'une surface chanfreinée et un rayon de courbure r d'une partie de coin d'une zone non chanfreinée satisfassent w ≥ r, et r < 3 mm, et que le matériau en feuille pour une fenêtre est serré par le moule de manière que l'élément d'encadrement en résine soit moulé intégralement le long de la partie de bord circonférentiel du matériau en feuille pour une fenêtre.

8. Le procédé de fabrication d'un matériau en feuille pour une fenêtre avec un élément d'encadrement d'après la revendication 7, sachant que le matériau en feuille pour une fenêtre est défini de telle manière qu'une distance M1 entre la partie de coin de la zone non chanfreinée et une partie de coin de l'élément d'encadrement dans la cavité soit 0,8 mm ≤ M1 ≤ 6 mm.

9. Le matériau en feuille pour une fenêtre avec un élément d'encadrement (10) d'après la revendication 1, sachant qu'une partie d'éclairage n'est pas prévue sur un côté intérieur d'un véhicule de la partie de coin (24) dans l'élément d'encadrement (12).
